# EUROPEAN PATENT APPLICATION

(11) **EP 2 934 028 A1**
(43) Date of publication of application: **21.10.2015**
(21) Application number: 13865433.0
(22) Date of filing: 17.09.2013
(51) Int. Cl.: H04W 4/24

(54) **ABNORMAL BILLING PROCESSING METHOD AND SYSTEM**

(30) Priority: 17.12.2012 CN 201210548360
(71) Applicant: ZTE Corporation, Shenzhen, Guangdong 518057 (CN)
(72) Inventor: SUN, Xuezhen, Shenzhen Guangdong 518057 (CN); GENG, Changjian, Shenzhen Guangdong 518057 (CN); DING, Jun, Shenzhen Guangdong 518057 (CN)
(74) Representative: Stöckeler, Ferdinand
(86) International application number: PCT/CN2013/083672
(87) International publication number: WO 2014/094471

(57) **Abstract**

A method and a system for processing abnormal billing are provided. The method includes: an abnormal state of a billing server is continuously detected and monitored, when the billing server is in an abnormal state, a pre-paid request is buffered, and when the billing server is restored to a normal state from the abnormal state, normal billing processing on the buffered pre-paid request is performed. The present invention ensures billing continuity, accuracy and security when an abnormality occurs in a billing server.

## Description

### Technical Field

The embodiments of the present invention relates to a communication billing technology, in particular to a method and a system for processing abnormal billing.

### Background

A considerable advantage of a pre-paid service (referred to as PPS) is to be able to bill a user in real time, avoid user overdraft and reduce operator loss. Account information of a pre-paid user is generally stored in an intelligent network service control point (referred to as SCP) billing server. A short message service centre server needs to establish a connection with an SCP server, and achieves real-time billing of the pre-paid user through a pre-paid request message.

The general flow for achieving the pre-paid service by the short message service centre server is as follows: a terminal user submits a message via a network to the short message service centre server; the short message service centre server initiates a pre-paid deduction request to an SCP billing server at a user home location according to user attribute and configuration information; and the SCP billing server operates on a pre-paid user fund account, and returns an operation result to the short message service centre server.

Therefore, when an abnormality occurs in an SCP billing server, the normal billing of terminal communication cannot be guaranteed, bringing enormous impact on a normal communication service. However, the existing communication billing solution cannot ensure billing continuity, accuracy and security when an abnormality occurs in an SCP billing server.

### Summary

The main purpose of the embodiments of the present invention is to provide a method for processing abnormal billing so as to ensure billing continuity, accuracy and security when an abnormality occurs in a billing server.

In addition, a system for processing abnormal billing is further provided so as to ensure billing continuity, accuracy and security when an abnormality occurs in a billing server.

According to one aspect of the embodiments of the present invention, a method for processing abnormal billing is provided and the method includes the following steps: A. the state information of a billing server is detected; B. it is analysed that whether the billing server is in a normal state according to the detected state information; C. when the billing server is in an abnormal state, a pre-paid request is buffered; D. the state restoration information of the billing server is detected, and according to the detected state restoration information, it is analysed that whether the billing server is restored to the normal state from the abnormal state; and E. when the billing server is restored to the normal state from the abnormal state, billing processing on the buffered pre-paid request is performed.

Preferably, the state information includes: a response overtime frequency of the billing server regarding the pre-paid request and a response error code returned by the billing server regarding the pre-paid request.

Preferably, the step B includes that: when it is detected that the response overtime frequency of the billing server regarding the pre-paid request is greater than a pre-set threshold value, it is determined that the billing server is in the abnormal state; and when the response error code returned by the billing server regarding the pre-paid request has been detected, it is determined that the billing server is in the abnormal state.

Preferably, the step D includes: a detection message is sent regularly to the billing server; response information returned by the billing server regarding the detection message is received, and the state restoration information refers to the response information of the billing server regarding the detection message; and it is analysed that whether the response information is normal to judge whether the billing server is restored to the normal state from the abnormal state.

Preferably, the step E includes: according to a pre-set traffic and a buffer time order of the pre-paid request, the buffered pre-paid request is sent to the billing server for billing; it is analysed whether there is a processing abnormality of a buffered pre-paid request; and when there is a processing abnormality of a buffered pre-paid request, the pre-paid request with a processing abnormality is re-sent.

According to another aspect of the embodiments of the present invention, a system for processing abnormal billing is further provided and the system includes: an abnormal billing component, configured to detect the state information of a billing server, analyse whether the billing server is in a normal state according to the detected state information, when the billing server is in an abnormal state, buffer a pre-paid request, and detect the state restoration information of the billing server, and according to the detected state restoration information, analyse whether the billing server is restored to the normal state from the abnormal state; and an abnormal processing component, configured to, when the billing server is restored to the normal state from the abnormal state, perform billing processing on the buffered pre-paid request.

Preferably, the state information includes a response overtime frequency of the billing server regarding the pre-paid request and a response error code returned by the billing server regarding the pre-paid request.

Preferably, the abnormal billing component is configured as: when it is detected that the response overtime frequency of the billing server regarding the pre-paid request is greater than a pre-set threshold value, determining that the billing server is in the abnormal state; and when the response error code returned by the billing server regarding the pre-paid request has been detected, determining that the billing server is in the abnormal state.

Preferably, the abnormal billing component is configured as: sending a detection message regularly to the billing server; receiving response information returned by the billing server regarding the detection message, and the state restoration information referring to the response information of the billing server regarding the detection message; and analysing whether the response information is normal to judge whether the billing server is restored to the normal state from the abnormal state.

Preferably, the abnormal processing component is configured as: according to a pre-set traffic and a buffer time order of the pre-paid request, sending the buffered pre-paid request to the billing server for billing; analysing whether there is a processing abnormality of a buffered pre-paid request; and when there is a processing abnormality of a buffered pre-paid request, re-sending the pre-paid request with a processing abnormality.

Compared with the prior art, the embodiments of the present invention, by means of continuously detecting and monitoring an abnormal state of a billing server, when the billing server is in an abnormal state, buffering a pre-paid request, and when the billing server is restored to a normal state from the abnormal state, performing normal billing processing on the buffered pre-paid request, ensures billing continuity, accuracy and security when an abnormality occurs in a billing server.

### Brief Description of the Drawings

Fig. 1 is an operating environment schematic diagram of an example embodiment of a short message server for achieving abnormal billing processing according to an embodiment of the present invention.
Fig. 2 is a hardware architecture diagram of an example embodiment of a short message server according to Fig. 1.
Fig. 3 is a functional component diagram of an example embodiment of a system for processing abnormal billing according to Fig. 2.
Fig. 4 is a specific implementation flowchart of an example embodiment of a method for processing abnormal billing according to an embodiment of the present invention.
Fig. 5 is a flowchart of an example embodiment of step S 15 according to Fig. 4.

Objectives and advantages related to the present invention will be illustrated in the subsequent descriptions and appended drawings.

### Detailed Description of the Embodiments

It should be understood that specific embodiments described here are only used for illustrating the present invention and not intended to limit the present invention.

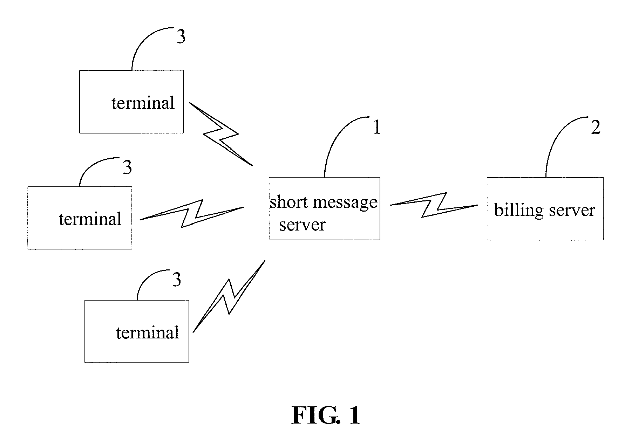

As shown in Fig. 1, it is an operating environment diagram of an example embodiment of a short message server for achieving abnormal billing processing according to an embodiment of the present invention. The short message server 1 is in communication connection with a billing server 2 and at least one terminal 3 (taking three terminals as an example in this figure). The terminal 3 may be a mobile phone, a computer, a tablet personal computer, a personal digital assistant (referred to as PDA) or any other applicable data processing devices.

In the present embodiment, the account information about the user of the terminal 3 is stored in the billing server 2; and the short message server 1 is in communication connection with the billing server 2, and the real-time billing of the user of the terminal 3 is achieved via a pre-paid authentication message.

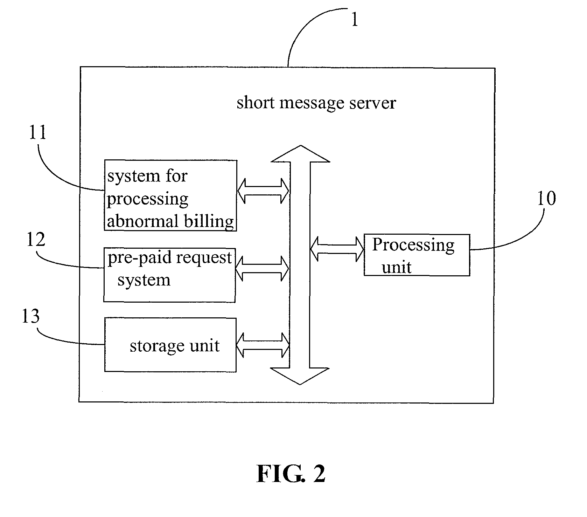

As shown in Fig. 2, it is a hardware architecture diagram of an example embodiment of a short message server in Fig. 1. The short message server 1 includes a system for processing abnormal billing 11, a processing unit 10, a storage unit 13 and a pre-paid request system 12.

The storage unit 13 is configured to store the abnormal billing processing system 11 and operating data thereof, and store the pre-paid request system 12 and operating data thereof.

The processing unit 10 is configured to invoke and execute the pre-paid request system 12 so as to detect an event to be paid of the terminal 3, deal with the detected event to be paid and initiate a pre-paid request to the billing server 2 so that the billing server 2 bills the event to be paid of the terminal 3. In the present embodiment, the event to be paid includes a calling event and a short message sending event. In other embodiments of the present invention, the event to be paid includes any applicable event requiring payment. Taking a global system for mobile communications (referred to as GSM) as an example of a communication system, when an event to be paid occurs in the terminal 3, a GSM core network side submits an calling message to the pre-paid request system 12, and after detecting the calling message, the pre-paid request system 12 deals with the detected calling message and initiates a pre-paid request to the billing server 2.

The processing unit 10 is further configured to invoke and execute the abnormal billing processing system 11 so as to achieve normal billing of the event to be paid of the terminal 3 when a billing abnormality occurs in the billing server 2.

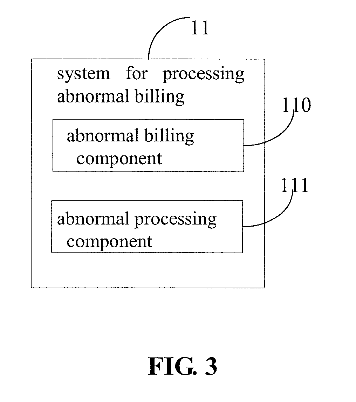

As shown in Fig. 3, it is a functional component diagram of an example embodiment of a system for processing abnormal billing in Fig. 2. The abnormal billing processing system 11 includes an abnormal billing component 110 and an abnormal processing component 111.

The abnormal billing component 110 is configured to detect the state information of the billing server 2, and according to the detected state information, analyse whether the billing server 2 is in a normal state. In the present embodiment, the abnormal billing component 110 detects the state information about the billing server 2 in real time, and in other embodiments of the present invention, the abnormal billing component 110 detects the state information about the billing server 2 regularly.

In the present embodiment, the state information includes a response overtime frequency of the billing server 2 regarding the pre-paid request and a response error code returned by the billing server 2 regarding the pre-paid request. The abnormal billing component 110, when it is detected that the response overtime frequency of the billing server 2 regarding the pre-paid request is greater than a pre-set threshold value, determines that the billing server 2 is in the abnormal state, and when the response error code returned by the billing server 2 regarding the pre-paid request has been detected, determines that the billing server 2 is in the abnormal state.

The abnormal billing component 110 is further configured to, when the billing server 2 is in the abnormal state, buffer the pre-paid request, detect state restoration information of the billing server 2, and according to the detected state restoration information, analyse whether the billing server 2 is restored to the normal state from the abnormal state. In the present embodiment, the abnormal billing component 110 detects the state restoration information of the billing server 2 regularly when the billing server 2 is in the abnormal state, and in other embodiments of the present invention, the abnormal billing component 110 detects the state restoration information of the billing server 2 in real time when the billing server 2 is in the abnormal state. In the present embodiment, the pre-paid request includes a payment deduction request and a payment supplement request. When it fails to deal with the event to be paid of the terminal 3, the pre-paid request system 12 sends the payment supplement request to the billing server 2 for making up the payment.

In the present embodiment, the state restoration information refers to response information about the billing server 2 regarding a detection message; and the abnormal billing component 110, when the billing server 2 is in the abnormal state, sends the detection message regularly to the billing server 2, receives the response information returned by the billing server 2 regarding the detection message, and analyses whether the response information is normal to judge whether the billing server 2 is restored to the normal state from the abnormal state.

The abnormal processing component 111 is configured to, when the billing server 2 is restored to the normal state from the abnormal state, perform billing processing on the buffered pre-paid request. In the present embodiment, the abnormal processing component 111 is configured as: according to a pre-set traffic and a buffer time order of the pre-paid request, sending the buffered pre-paid request to the billing server 2 for billing; analysing whether there is a processing abnormality of a buffered pre-paid request; and when there is a processing abnormality of a buffered pre-paid request, re-sending the pre-paid request with a processing abnormality. The processing abnormality includes a failure of sending the buffered pre-paid request and a failure of the billing server 2 responding to the buffered pre-paid request.

In the present embodiment, the purpose of the abnormal processing component 111 sending the buffered pre-paid request to the billing server 2 according to a pre-set traffic is to avoid impact on a billing system due to too much traffic.

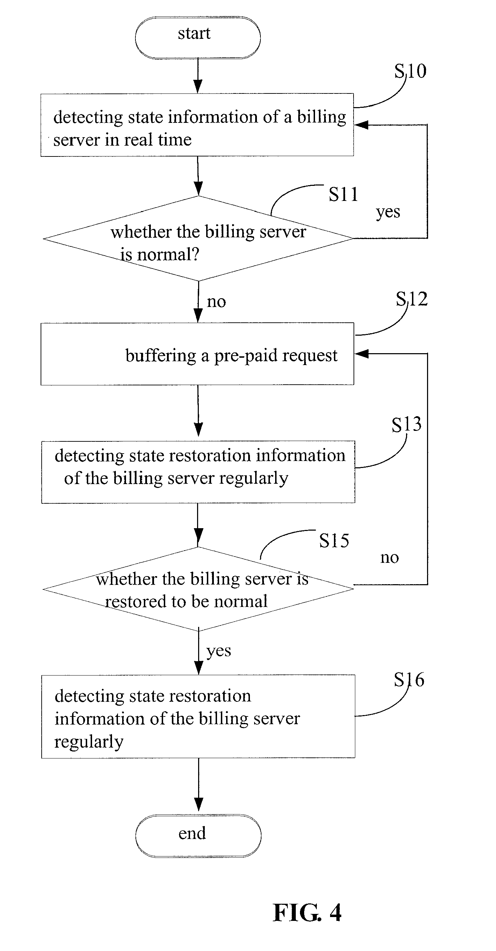

As shown in Fig. 4, it is a specific implementation flowchart of an example embodiment of a method for processing abnormal billing according to an embodiment of the present invention.

It should be emphasized that the flowchart shown in Fig. 4 is merely an example embodiment, those skilled in the art should know that any embodiment constructed by revolving the concept of the embodiments of the present invention should not be away from the range covered by the following technical solutions:
state information of a billing server 2 is detected; it is analysed that whether the billing server 2 is in a normal state according to the detected state information; when the billing server 2 is in an abnormal state, a pre-paid request is buffered and state restoration information of the billing server 2 is detected; according to the detected state restoration information, it is analysed that whether the billing server 2 is restored to the normal state from the abnormal state; and when the billing server 2 is restored to the normal state from the abnormal state, billing processing on the buffered pre-paid request is performed.

Normal billing when the billing server 2 is in the abnormal state is achieved gradually in combination with the present embodiment below.
Step S10, the abnormal billing component 110 detects the state information about the billing server 2.
Step S11, the abnormal billing component 110 analyses whether the billing server 2 is in the normal state according to the detected state information. In the present embodiment, the abnormal billing component 110 detects the state information of the billing server 2 in real time, and in other embodiments of the present invention, the abnormal billing component 110 detects the state information of the billing server 2 regularly.

In the present embodiment, the state information includes a response overtime frequency of the billing server 2 regarding the pre-paid request and a response error code returned by the billing server 2 regarding the pre-paid request. The abnormal billing component 110, when it is detected that the response overtime frequency of the billing server 2 regarding the pre-paid request is greater than a pre-set threshold value, determines that the billing server 2 is in the abnormal state, and when the response error code returned by the billing server 2 regarding the pre-paid request has been detected, determines that the billing server 2 is in the abnormal state.

When the billing server 2 is in the normal state, return to execute the above-mentioned step S10, or when the billing server 2 is in the abnormal state, go to execute the following step S12.
Step S12, the abnormal billing component 110 buffers the pre-paid request.
Step S 13, the abnormal billing component 110 detects the state restoration information of the billing server 2.
Step S 15, the abnormal billing component 110, according to the detected state restoration information, analyses whether the billing server 2 is restored to the normal state from the abnormal state. In the present embodiment, the abnormal billing component 110 detects the state restoration information of the billing server 2 regularly when the billing server 2 is in the abnormal state, and in other embodiments of the present invention, the abnormal billing component 110 detects the state restoration information of the billing server 2 in real time when the billing server 2 is in the abnormal state.

In the present embodiment, the state restoration information refers to response information about the billing server 2 regarding a detection message; and the abnormal billing component 110, when the billing server 2 is in the abnormal state, sends the detection message regularly to the billing server 2, receives the response information returned by the billing server 2 regarding the detection message, and analyses whether the response information is normal to judge whether the billing server 2 is restored to the normal state from the abnormal state.

When the billing server 2 is not restored to the normal state, the above-mentioned step S 12 is returned, or when the billing server 2 is restored to the normal state from the abnormal state, the following step S 16 would be executed.
Step S16, the billing processing is performed on the buffered pre-paid request.

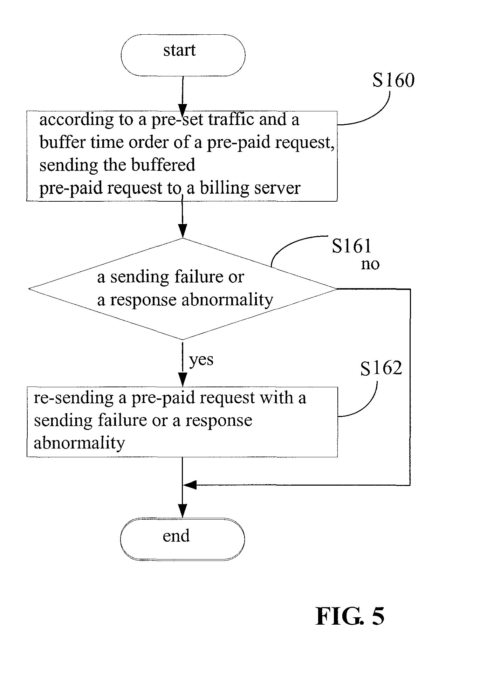

As shown in Fig. 5, it is a refined flowchart of an example embodiment of step S16 in Fig. 4.
Step S160, the abnormal processing component 111, according to a pre-set traffic and a buffer time order of the pre-paid request, sends the buffered pre-paid request to the billing server 2 for billing.
Step S161, the abnormal processing component 111 analyses whether there is a processing abnormality of a buffered pre-paid request.

When there is a buffered pre-paid request processing abnormality, go to execute the following step S162.
Step S162, the abnormal processing component 111 re-sends a pre-paid request with a processing abnormality. The processing abnormality includes a failure of sending the buffered pre-paid request and a failure of the billing server 2 responding to the buffered pre-paid request.

The above are only the example embodiments of the present invention and are not intended to limit the patent scope of the present invention. Any equivalent replacements of the structure or the flow based on the contents of the specification and drawings of the present invention or direct or indirect application of the equivalent replacements in other related technical fields shall fall within the scope of protection of the present invention.

### Industrial Applicability

The technical solutions provided by the embodiments of the present invention may be applied to the field of pre-paid services, and solve the problem that the existing communication billing solution cannot ensure billing continuity, accuracy and security when an abnormality occurs in an SCP billing server.

## Claims

1. A method for processing abnormal billing, **characterized by** comprising the following steps:
A. detecting state information of a billing server;
B. analysing whether the billing server is in a normal state according to the detected state information;
C. when the billing server is in an abnormal state, buffering a pre-paid request;
D. detecting state restoration information of the billing server, and according to the detected state restoration information, analysing whether the billing server is restored to the normal state from the abnormal state; and
E. when the billing server is restored to the normal state from the abnormal state, performing billing processing on the buffered pre-paid request.

2. The method according to claim 1, **characterized in that** the state information comprises: a response overtime frequency of the billing server regarding the pre-paid request and a response error code returned by the billing server regarding the pre-paid request.

3. The method according to claim 2, **characterized in that** the step B comprises:
when it is detected that the response overtime frequency of the billing server regarding the pre-paid request is greater than a pre-set threshold value, determining that the billing server is in the abnormal state; and
when the response error code returned by the billing server regarding the pre-paid request has been detected, determining that the billing server is in the abnormal state.

4. The method according to claim 1, **characterized in that** the step D comprises:
sending a detection message regularly to the billing server;
receiving response information returned by the billing server regarding the detection message, and the state restoration information referring to the response information of the billing server regarding the detection message; and
analysing whether the response information is normal to judge whether the billing server is restored to the normal state from the abnormal state.

5. The method according to claim 1, **characterized in that** the step E comprises:
according to a pre-set traffic and a buffer time order of the pre-paid request, sending the buffered pre-paid request to the billing server for billing;
analysing whether there is a processing abnormality of a buffered pre-paid request; and
when there is a processing abnormality of a buffered pre-paid request, re-sending the pre-paid request with a processing abnormality.

6. A system for processing abnormal billing, **characterized by** comprising:
an abnormal billing component, configured to detect state information of a billing server, analyse whether the billing server is in a normal state according to the detected state information, when the billing server is in an abnormal state, buffer a pre-paid request, and detect state restoration information of the billing server, and according to the detected state restoration information, analyse whether the billing server is restored to the normal state from the abnormal state; and
an abnormal processing component, configured to, when the billing server is restored to the normal state from the abnormal state, perform billing processing on the buffered pre-paid request.

7. The system according to claim 6, **characterized in that** the state information comprises a response overtime frequency of the billing server regarding the pre-paid request and a response error code returned by the billing server regarding the pre-paid request.

8. The system according to claim 7, **characterized in that** the abnormal billing component is configured as:
when it is detected that the response overtime frequency of the billing server regarding the pre-paid request is greater than a pre-set threshold value, determining that the billing server is in the abnormal state; and
when the response error code returned by the billing server regarding the pre-paid request has been detected, determining that the billing server is in the abnormal state.

9. The system according to claim 6, **characterized in that** the abnormal billing component is configured as:
sending a detection message regularly to the billing server;
receiving response information returned by the billing server regarding the detection message, and the state restoration information referring to the response information of the billing server regarding the detection message; and
analysing whether the response information is normal to judge whether the billing server is restored to the normal state from the abnormal state.

10. The system according to claim 6, **characterized in that** the abnormal processing component is configured as:
according to a pre-set traffic and a buffer time order of the pre-paid request, sending the buffered pre-paid request to the billing server for billing;
analysing whether there is a processing abnormality of a buffered pre-paid request; and
when there is a processing abnormality of a buffered pre-paid request, re-sending the pre-paid request with a processing abnormality.
